# EUROPÄISCHE PATENTANMELDUNG

(11) **EP 1 422 948 A2**
(43) Veröffentlichungstag der Anmeldung: **26.05.2004**
(21) Anmeldenummer: 04004455.4
(22) Anmeldetag: 15.06.2001
(51) Int. Cl.: H04Q 1/14

(54) **Verteilereinrichtung einer Datensignal-Verarbeitungsanlage und Datensignal-Verarbeitungsanlage**

(30) Priorität: 16.06.2000 DE 10029870
(62) Teilanmeldung aus: 01951385.2
(71) Anmelder: CCS Technology, Inc., Wilmington, DE 19803 (US)
(72) Erfinder: Czigon, Ralf, 66793 Saarwellingen (DE); Breuer, Mike, 59065 Hamm (DE); Badura, Stefan, 58706 Menden (DE); Zimmer, Rainer, 58579 Schalksmühle (DE)
(74) Vertreter: Sturm, Christoph, Dipl.-Ing.

(57) **Zusammenfassung**

Verteilereinrichtung 2 einer Datensignal-Verarbeitungsanlage 1 und Datensignal-Verarbeitungsanlage 1, mit einem Verteilerblock 3, der Funktionselemente, an die Datensignalleitungen 4,5,6 anschließbar sind und die eine Verschaltung zur Verteilung der von den Datensignalleitungen 4,5,6 übermittelten Signale aufweisen, und eine Aufnahmevorrichtung aufweist, in welcher die Funktionselemente aufgenommen sind, und einer Datensignal-Aufbereitungseinheit mit aktiven und/oder passiven elektronischen Bauteilen, von der die von den Datensignalleitungen 3,4,5 übermittelten Datensignale in vorbestimmter Weise aufbereitet werden, wobei die Datensignal-Aufbereitungseinheit in die Komponenten des Verteilerblocks 3 integriert ist.

## Beschreibung

Die Erfindung betrifft eine Verteilereinrichtung, insbesondere einen Hauptverteiler, einer Datensignal-Verarbeitungsanlage, eine Datensignal-Verarbeitungsanlage sowie ein Kassettenelement für eine Verteilereinrichtung einer Datenverarbeitungsanlage.

Verteilereinrichtungen werden zum Beispiel in Telekommunikationsanlagen eingesetzt, insbesondere dann, wenn eine größere Anzahl von Teilnehmern mit einer zugehörigen Vermittlungseinrichtung verbunden werden soll. Über die Telekommunikationsanlage findet hierbei neben dem Transfer von Sprachdaten von Telefongeräten auch verstärkt ein Transfer von Rechnerdaten statt.

Um hierfür bereits bestehende Strukturen von Kupferkabelnetzen ausnutzen zu können, werden sowohl für die niedrigfrequenten Sprachsignale als auch für die höherfrequenten Rechnersignale gemeinsame Übertragungsleitungen verwendet. Um hierbei Rechnerdaten und Sprachdaten gleichzeitig über eine gemeinsame Leitung transferieren zu können, müssen die zugehörigen Signale sowohl auf der Kundenseite, als auch in einer Vermittlungsstelle zusammengeführt sowie nach der Übermittleungsstrecke wieder voneinander getrennt werden. Dies geschieht beispielsweise mit sogenannten Splittereinrichtungen, von denen die Sprach- und Rechnersignale gemäß deren unterschiedlichen Signalfrequenzen voneinander getrennt und der jeweiligen Verwendung zugeordnet werden. Das heißt, es erfolgt eine Aufbereitung von Datensignalen durch eine gezielte Aufteilung von Frequenzbereichen der zu übermittelnden Daten an jeweilige Sprachteilnehmer sowie die zur Verarbeitung der Daten vorgesehenen Einrichtungen.

Solche Datenaufbereitungseinrichtungen sind bislang als additive Komponenten vorgesehen, die als externe Komponenten zu bestehenden Datensignal-Verarbeitungsanlagen hinzugefügt sind. Hierdurch ergeben sich Probleme dahingehend, dass solche Datenaufbereitungseinrichtungen mit langen Anschlusswegen und einer hohen Anzahl von elektronischen Kontaktelementen zur Herstellung der notwendigen Verbindungen zu der Datensignal-Verarbeitungsanlage einhergehen. Hierdurch wird die zugehörige Gesamtanlage insgesamt teurer und störanfälliger, wobei letzteres insbesondere bei langen Übertragungsstrecken der Fall ist. Hierbei müssen dann durch lange Leitungswege und viele Kontaktstellen verursachte Verluste in der Signalleistung durch aufwendige und wiederum teure Verstärkungs- und Entstörungsmaßnahmen beseitigt werden.

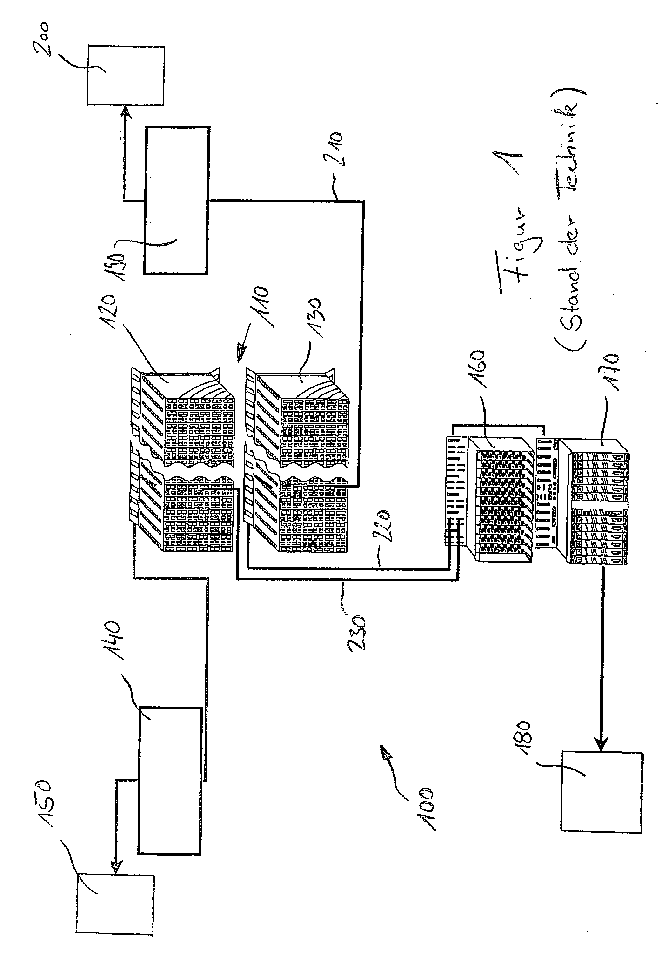

In Figur 1 ist ein schematischer Aufbau einer solchen Datenverarbeitungsanlage 100 mit Verteilereinrichtung 110 gemäß dem Stand der Technik dargestellt. Hiernach weist die Verteilereinrichtung 110 zwei separate Verteilerblöcke 120, 130 auf, von denen der Verteilerblock 120 zur ausschließlichen Übertragung von Sprachdatensignalen mit einer Schaltanlage 140 (z.B. einem Verteilerblock) eines Telefonvermittlungssystems 150 sowie einer Splittereinrichtung 160 verbunden ist, welche ihrerseits zur Übertragung von ausschließlich Rechnerdatensignalen mit einer Modemeinrichtung 170 verbunden ist, welche mit einem Rechnernetzwerk 180 in Verbindung steht. Der zweite Verteilerblock 130 der Verteilereinrichtung 110 ist zur Übertragung von sowohl Rechner- als auch Sprachdatensignalen mit der Schaltanlage 190 (z.B. einem Verteilerblock) eines Teilnehmers 200 und der Splittereinrichtung 160 verbunden. Bei dieser Telekommunikationsanlage werden vom Teilnehmer 200 ausgehende Rechner- und Sprachdatensignale auf einer gemeinsamen Leitung 210 zum zweiten Verteilerblock 130 übermittelt und von diesem über eine Verteilerleitung 220 an die Splittereinrichtung 160 weitergeleitet. Von der Splittereinichtung 160 werden die Sprach- und Rechnerdatensignale aufgetrennt, wobei die Rechnerdatensignale an die Modemeinrichtung 170 weitergeleitet werden und die Sprachdatensignale an den ersten Verteilerblock 120 weitergeleitet werden, von dem sie dann dem Telefonvermittlungssystem 150 zugeführt werden. Im umgekehrten Falle werden die vom Telefonvermittlungssystem 150 über den ersten Verteilerblock 120 ankommenden Sprachdatensignale sowie die vom Rechnernetzwerk über das Modem 170 ankommenden Rechnerdatensignale von der Splittereinrichtung 160 zusammengeführt und über den zweiten Verteilerblock 130 an den Teilnehmer 200 weitergegeben. Bei dieser Telekommunikationsanlage 100 sind Verbindungsleitungen 220, 230 mit zugehörigen Anschlüssen sowohl zwischen dem ersten Verteilerblock 120 und der Splittereinrichtung 160 als auch zwischen dem zweiten Verteilerblock 130 und der Splittereinrichtung 160 erforderlich.

Es ist eine Aufgabe der Erfindung, eine Einrichtung für eine Datensignal-Verarbeitungsanlage sowie eine Datensignal-Verarbeitungsanlage zu schaffen, bei welchen Sprachdaten- und Rechnerdatensignale über gemeinsame Leitungen übertragbar sind und mit welchen dennoch eine gute und störungssichere Datenübertragung auch bei langen Übertragungsstrecken ermöglicht ist. Es ist eine andere Aufgabe der Erfindung, ein Mittel bereitzustellen, mit dem eine bestehende Datensignal-Verarbeitungsanlage unter Ausbildung einer erfindungsgemäßen Anlage auf einfache Weise nachrüstbar ist.

Erfindungsgemäß ist eine Verteilereinrichtung, insbesondere ein Hauptverteiler, einer Datensignal-Verarbeitungsanlage vorgesehen, mit einem Verteilerblock, der Funktionselemente aufweist, an die Datensignalleitungen angeschlossen werden können und die eine Verschaltung zur Verteilung der von den Datensignalleitungen an die Verteilereinrichtung übermittelten Datensignale aufweisen. Der Verteilerblock weist ferner eine Aufnahmevorrichtung auf, in welcher die Funktionselemente aufgenommen sind. Die Verteilereinrichtung hat eine Datensignal-Aufbereitungseinheit mit aktiven und/oder passiven elektronischen Bauteilen, von der die von den Datensignalleitungen übermittelten Datensignale in vorbestimmter Weise aufbereitet werden. Diese Datensignal-Aufbereitungseinheit ist in die Komponenten des Verteilerblocks integriert.

Unter passiven elektronischen Bauteilen sind hier Bauteile, wie zum Beispiel Widerstände, Kondensatoren, Spulen und dergleichen zu verstehen, wohingegen aktive elektronische Bauteile als alle Arten von Halbleiterelementen, wie zum Beispiel Transistoren, zu verstehen sind.

Mittels der Datensignal-Aufbereitungseinheit können die Datensignale, welche sowohl analoge als auch digitale Sprachdaten- und Rechnerdatensignale sein können, in gewünschter Weise aufbereitet, z.B. aufgeteilt, zielorientiert zugeordnet oder organisiert sowie wieder zu einem kombinierten Sprachdaten-/Rechnerdaten-Gesamtsignal zusammengeführt werden, um somit eine große Anzahl an gleichzeitig über die Signalleitungen von Teilnehmern übermittelten Sprach- und Rechnerdatensignale zielgerecht weiterzuleiten.

Mittels der Integration dieser Datensignal-Aufbereitungseinheit in die Verteilereinrichtung kann hierbei eine starke Vereinfachung des Aufbaus einer zugehörigen Telekommunikationsanlage erreicht werden. So können die von Telefonvermittlungssystemen und Netzwerken ausgehenden Datensignale unmittelbar, d.h. ohne Zwischenschaltung weiterer Verteiler- oder Aufbereitungssysteme, an die Verteilereinrichtung geleitet werden, da die Aufbereitung der Datensignale von der in die Verteilereinrichtung integrierten Datensignal-Aufbereitungseinheit durchgeführt wird. Ferner entfallen durch die integrale Ausbildung der Verteilereinrichtung mit der Datensignal-Aufbereitungseinheit lange Übertragungsleitungen zwischen Verteilerblöcken und Datensignal-Aufbereitungseinheit; insbesondere weist die Verteilereinrichtung eine reduzierte Anzahl an Leitungen und an zugehörigen Anschlüssen auf, da sowohl von den Teilnehmern als auch vom Netzwerk und einem Telefonvermittlungssystem Leitungen unmittelbar an den verteilerblock der Verteilereinrichtung herangeführt werden können, ohne dass irgendwelche Umleitungen zu anderen Verteilerblöcken und Aufbereitungsanlagen notwendig sind. Damit wird eine insgesamt einfachere und damit auch erheblich kostengünstigere und schneller installierbare Anlage bereitgestellt. Auch der Platzbedarf der Anlage ist mit dem Wegfall von Leitungen sowie mit der Verkürzung von Leitungswegen verringert.

Mit den kürzeren Leitungswegen und der geringeren Anzahl an zusätzlichen elektrischen Kontaktstellen für zusätzliche elektrische Verbindungen werden ferner auch die Leistungsfähigkeit der Anlage erhöht sowie deren Störanfälligkeit verringert.

Die Verteilereinrichtung stellt ihrerseits körperlich gesehen ein Bauteil mit ausreichend großen Räumlichkeiten sowie diesbezüglichen problemlosen Erweiterungsmöglichkeiten zur Unterbringung von zusätzlichen Bauteilen dar, so dass die Anbringung der elektronischen Bauteile der Datensignal-Aufbereitungseinheit an den Hardwareteilen, d.h. Baukomponenten, des Verteilers in einfacher Weise und damit kostengünstig realisierbar ist.

Die Verteilereinrichtung stellt somit durch die integrale Ausbildung des Verteilerblocks mit der Datensignal-Aufbereitungseinheit und die dadurch erreichten kurzen Verschaltungs- und Leitungswege und verringerte Anzahl an elektrischen Kontaktstellen ein leistungsstarkes und dennoch wenig störanfälliges System für den Einsatz in einer Datensignal-Verarbeitungsanlage dar.

Mit der erfindungsgemäßen Verteilereinrichtung wird ferner eine sichere Abtrennung von jeweiligen Teilnehmern erreicht, da die Aufteilung und damit Aufschlüsselung deren Datensignale zugriffssicher innerhalb der für Dritte nicht zugänglichen Verteilereinrichtung erfolgt.

Die erfindungsgemäße Verteilereinrichtung kann zum Anschluss von Kupferleitungen vorgesehen sein, die an zugehörigen Kabelklemmen, bevorzugt Schneidklemmen, befestigt werden, welche ihrerseits unter Ausbildung einer oder mehrerer Klemmleiste(n) in einer oder mehreren Reihe(n) an dem jeweiligen Funktionselement angeordnet sind. Alternativ dazu können die Funktionselemente auch zur Aufnahme von Koaxialkabeln und Lichtwellenleiterkabeln ausgebildet sein. Nach einer Ausführung ist die Verteilereinrichtung als Hybridverteiler ausgebildet, der Funktionselemente zur Aufnahme von allen drei genannten Leitungsarten, d.h. Kupfer-, Koaxialund Lichtleiter-Kabel, hat.

Gemäß einer bevorzugten Ausführungsform der Erfindung weist die Datensignal-Aufbereitungseinheit eine Filter-Anordnung aus Hoch- und/oder Tief- und/oder Bandpassfiltern auf, von der die von den Datensignalleitungen übermittelten Datensignale gemäß deren Frequenzbereichen ausfilterbar und weiterleitbar ist.

Das heißt, von der Filter-Anordnung werden die auf einer Datensignalleitung gleichzeitig übermittelten Datensignale, wie Sprachdaten- und Rechnerdatensignale, je nach deren spezifischen Frequenzbereichen ausgefiltert und an zugehörige Verteilerleitungen weitergeleitet, die z.B. zu einer Modemeinrichtung mit nachfolgendem Rechnernetzwerk oder zu einem Telefonvermittlungssystem führen. Hierdurch kann ein Datentransfer von unterschiedlichen Datensignalen zwischen der Verteilereinrichtung und daran angeschlossenen Teilnehmern über eine gemeinsame, dem jeweiligen Teilnehmer zugeordnete Datensignalleitung erfolgen. Den unterschiedlichen Datensignalen sind hierbei unterschiedliche Datensignalfrequenzen zugeordnet, welche von der Filter-Anordnung erfasst werden, um die zugehörigen Datensignale auszufiltern und entsprechend dem jeweiligen Teilnehmer sowie der Datensignalart (Sprachdatensignal oder Rechnerdatensignale) gezielt weiterleiten zu können.

Obwohl die elektronischen Bauteile der Datensignal-Aufbereitungseinheit beispielsweise über separate Halterungen innerhalb der Aufnahmevorrichtung angebracht sein können, sind sie bevorzugt unmittelbar an einem oder mehreren der Funktionselemente und/oder an der Aufnahmevorrichtung angeordnet. Dies geschieht zum Beispiel dadurch, dass die Bauteile direkt an Wandelementen der Aufnahmevorrichtung befestigt, z.B. genietet oder geschraubt, oder auf Platinenelemente der Funktionselemente mitaufgelötet werden. Hierdurch wird eine platzsparendere und kostengünstigere Konstruktion erreicht, indem die per se vorhandenen Bestandteile des Verteilerblocks unmittelbar zur Anbringung der zusätzlichen Bauteile ausgenutzt werden. Dies stellt damit einen maximal integrativen Aufbau dar.

Alternativ dazu kann der Verteilerblock auch ein oder mehrere Kassettenelemente oder Steckerelemente aufweisen, die mit zugehörigen Funktionselementen zur gegenseitigen Übertragung von Datensignalen lösbar zusammengebaut sind und in welchen die Datensignal-Aufbereitungseinheit oder ein Teil davon angeordnet ist. Hierbei ist es möglich, durch einfaches Auswechseln der Kassettenelemente oder Steckerelemente den Verteilerblock mit aktuellen Datensignal-Aufbereitungseinheiten nachzurüsten, ohne den Verteiler insgesamt auswechseln zu müssen oder aufwendige und damit teure Arbeiten, wie zum Beispiel Löten, durchführen zu müssen. Das jeweilige Kassettenelement und das zugehörige Funktionselement sind bevorzugt über eine einfache Steckverbindung aneinander angebracht, die gleichzeitig als Schnittstelle zwischen dem Kassettenelement und dem Funktionselement ausgebildet ist.

Im Falle der Verwendung von Kassettenelementen oder Steckerelementen als Unterbringungsort der Bauteile der Datensignal-Aufbereitungseinheit im Verteilerblock ist es besonders bevorzugt das jeweilige Kassettenelement oder Steckerelement derart auszubilden, dass es im Austausch gegen ein Überspannungs-/Überstromschutz-Magazin bzw. einen Überspannungs-/Überstrom-Schutzstecker sowie unter Verwendung deren Schnittstelle an das Funktionselement angeschlossen werden kann. Solche Schutzmagazine und Schutzstecker sind an diversen Ausführungsformen von Hauptverteilern bzw. Verteilerleisten gemäß dem Stand der Technik vorgesehen. Ihr Ersatz durch die erfindungsgemäßen Kassettenelemente bzw. Steckerelemente stellt daher eine besonders einfache und platzsparende Ausführungsform dar, bei der wenig zusätzliche bauliche Änderungen an der Verteilerkonstruktion vorgenommen werden müssen. Mit dem erfindungsgemäßen Kassettenelement bzw. dem Steckerelement können somit auch bestimmte bestehende Verteiler nachgerüstet werden.

Nach einer Ausführungsform der Erfindung ist die Aufnahmevorrichtung in Form einer Aufnahmewanne ausgebildet, in welche die Funktionselemente einsteckbar sind, wobei die elektronischen Bauteile der Datensignal-Aufbereitungseinheit oder ein Teilanzahl der Bauteile auf dem Boden der Wanne angebracht sind, und wobei auf dem Boden der Wanne wenigstens ein Steckverbinderteil angebracht ist, das an die am Boden der Aufnahmewanne angebrachten elektronischen Bauteile der Datensignal-Aufbereitungseinheit angeschlossen ist und in das ein zugehöriges Funktionselement unter Herstellung eines elektrischen Kontakts zwischen dem Funktionselement und den am Boden der Aufnahmewanne angebrachten Bauteilen der Datensignal-Aufbereitungseinheit eingreifen kann.

Die Aufnahmewanne bildet mit ihrer dreiseitig geschlossenen Form eine sicheres Gehäuse, welches zudem von seiner offenen Seite her in einfacher und variabler Weise mit den einsteckbaren Funktionselementen bestückbar ist. Die vorliegende große Bodenfläche der Wanne stellt hierbei einen sehr geschützten und dennoch einfach zugänglichen Ort für die Unterbringung von elektronischen Bauteilen dar, denn die Bodenfläche ist rückseitig durch die zugehörige Bodenwand der Aufnahmewanne sowie nach vorne durch die aufgesteckten Funktionselemente geschützt; sie ist ferner durch einfaches Ausstecken der Funktionselemente schnell freizulegen. Durch den auf der Bodenwanne installierten Steckverbinder ist ebenfalls in einfacher Weise eine sichere elektrische Funktionsverbindung zwischen der Datensignal-Aufbereitungseinheit und den Funktionselementen erzielt.

Obwohl die elektronischen Bauteile beispielsweise direkt am Wannenboden angebracht sein können, sind sie bevorzugt auf einer am Boden der Aufnahmewanne angebrachten Platine angeordnet. Diese Platine wird auch als Backplane bezeichnet und hat den Vorteil, dass die zugehörige Datensignal-Aufbereitungseinheit als ein Teil an die Aufnahmewanne montierbar und von derselben auswechselbar ist, so dass die zugehörige Verteilereinrichtung einfacher zusammengebaut und gewartet werden kann.

Alternativ oder zusätzlich sind die elektronischen Bauteile der Datensignal-Aufbereitungseinheit oder eine Teilanzahl der Bauteile auf einer oder mehreren Trägerplatine/n angeordnet, die lösbar mit dem jeweils zugehörigen Funktionselement zusammengebaut ist/sind. Die Trägerplatine ist hierbei zum Beispiel unmittelbar an der Hinterseite des Funktionselements unter Verlängerung desselben angebracht und elektrisch mit dem Funktionselement verbunden.

Ferner alternativ oder zusätzlich sind die elektronischen Bauteile der Datensignal-Aufbereitungseinheit oder eine Teilanzahl der Bauteile auf einer oder mehreren zwischenplatine/n angeordnet, die je zwischen zwei Funktionselementen angeordnet ist/sind und welche mit einer Kontaktierungseinrichtung versehen ist/sind. Über letztere sind die elektronischen Bauteile auf der Zwischenplatine mit der Verschaltung der Verteilereinrichtung verbunden.

Im Falle der Verwendung der Funktionselemente als Aufnehmer der/von Bauteile/n der Datensignal-Aufbereitungseinheit weisen die Funktionselemente vorteilhafterweise Leiterplatinen auf, welche zur Aufnahme der elektronischen Bauteile der Datensignal-Aufbereitungseinheit vorgesehen sind und an welchen Anschlüsse zum Anschluss der Datensignalleitungen angebracht sind. Die Leiterplatinen stellen Bauteile mit geringen Abmessungen und hoher Sicherheit hinsichtlich der Übertragung elektrischer Signale dar. Sie können ferner auch als unmittelbare Träger von Anschlussteilen für die anzuschließenden Signalleitungen vorgesehen sein, so dass eine weitere Platzersparnis und ein einfacherer und damit kostengünstigerer Aufbau erzielt ist. Bei der Verwendung von Kupferkabeln oder dergleichen Litzenkabeln als Signalleitungen sind als Anschlussteile bevorzugt Schneidklemmen vorgesehen. Bei der Verwendung von Koaxial- und/oder Lichtwellenleiterkabeln können an die Leiterplatinen zugehörige Stecker montiert, z.B. geschraubt, sein.

Gemäß der Erfindung ist ferner eine Datensignal-Verarbeitungsanlage mit der erfindungsgemäßen Verteilereinrichtung vorgesehen. Diese Daten-/Datensignal-Verarbeitungsanlage stellt gemäß den oben beschriebenen Vorteilen der Verteilereinrichtung eine leistungsfähige und störungsfreie Anlage dar, mit welcher Sprachdaten- und Rechnerdatensignale auch über lange Übertragungsstrecken hinweg schnell und sicher übertragbar sind.

Des Weiteren ist erfindungsgemäß ein Kassettenelement vorgesehen, welches eine Datensignal-Aufbereitungseinheit aus aktiven und/oder passiven elektronischen Bauteilen aufweist, von der einer Verteilereinrichtung einer Datensignalverarbeitungsanlage zugeführte Datensignale in vorbestimmter Weise aufbereitet werden. Das erfindungsgemäße Kassettenelement ist derart ausgebildet ist, dass es über eine Schnittstelle, die an einem zugehörigen Funktionselement der Verteilereinrichtung angeordnet ist, zur gegenseitigen Übertragung von Datensignalen an dem Funktionselement angebracht werden kann. Die erfindungsgemäßen Kassettenelemente können in einfacher Weise durch hinichtlich der jeweils auf ihnen angeorneten Datensignal-Aufbereitungseinheit aktualisierte Kassettenelemente auswechseln.

Bevorzugt ist das Kassettenelement derart ausgebildet, dass es im Austausch gegen ein Überspannungs-/Überstromschutz-Magazin sowie unter Verwendung von dessen Schnittstelle an ein zugehöriges Funktionselement der Verteilereinrichtung zur gegenseitigen Übertragung von Datensignalen angeschlossen werden kann. Mit diesem erfindungsgemäßen Kassettenelement können bestehende Verteilereinrichtungen, wie z.B. bestimmte Hauptverteiler von Telekommunikationsanlagen, mit einer Datensignal-Aufbereitungseinheit nachgerüstet werden, wodurch bestehende Kommunikationssysteme zu einfacheren und robusteren Systemen umwandelbar sind.

Die Erfindung wird im Folgenden anhand einer bevorzugten Ausführungsform mit Bezugnahme auf die Zeichnung erläutert. In der Zeichnung zeigen:
Figur 1 eine Telekommunikationsanlage gemäß dem Stand der Technik,
Figur 2 eine Datensignal-Aufbereitungsanlage in Form einer Telekommumikationsanlage gemäß einer Ausführung der Erfindung,
Figuren 3 und 4 perspektivische Ansichten einer Aufnahmewanne eines Verteilerblocks einer Verteilereinrichtung gemäß einer Ausführungsform der Erfindung,
Figur 5 eine perspektivische Ansicht eines Funktionselements eines Verteilerblocks einer erfindungsgemäßen Verteilereinrichtung,
Figuren 6 und 7 perspektivische Ansichten eines erfindungsgemäßen Kassettenelements einer Verteilereinrichtung nach einer Ausführungsform der Erfindung,
Figur 8 eine perspektivische Ansicht einer Verteilerleiste nach einer Ausführungsform der Erfindung,
Figur 9 eine perspektivische Ansicht eines Einzelsteckers einer Verteilerleiste nach einer Ausführungsform der Erfindung,
Figur 10 eine perspektivische Ansicht einer Steckerplatine einer Verteilerleiste nach einer Ausführungsform der Erfindung,
Figur 11 eine perspektivische Ansicht einer Aufnahmewanne eines Verteilerblocks einer Verteilereinrichtung gemäß einer Ausführungsform der Erfindung,
Figuren 12 und 13 perspektivische Ansichten eines Hauptverteilers gemäß einer Ausführungsform der Erfindung, die den Zusammenbau des Hauptverteilers demonstrieren und
Figur 14 eine perspektivische Ansicht eines Hauptverteilers gemäß einer anderen Ausführungsform der Erfindung.

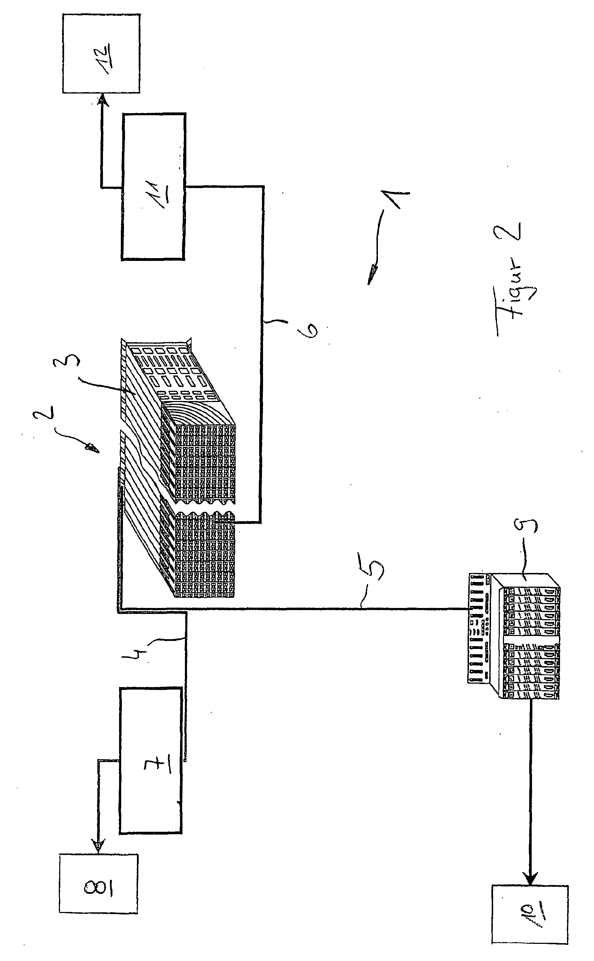

Die in Figur 2 gezeigte, erfindungsgemäße Telekommunikationsanlage 1 weist eine Verteilereinrichtung 2 mit einem einzigen Verteilerblock 3 auf, an den über Leitungen 4, 5 und 6 eine Schaltanlage 7 (z.B. einem Verteilerblock) eines Telefonvermittlungssystems 8, eine Modemeinrichtung 9 eines Rechnernetzwerks 10 bzw. eine Schaltanlage 11 (z.B. einem Verteilerblock) eines Teilnehmers 12 angeschlossen sind. Im Falle dass eine derart große Anzahl von Teilnehmern 6 an den Verteilerblock angeschlossen ist, dass ein einziger Verteilerblock 3 nicht ausreicht, können auch mehrere gekoppelte Verteilerblöcke vorgesehen sein. Über die Leitung 4 werden zwischen dem Verteilerblock 3 und dem Telefonvermittlungssystem nur niederfrequente Sprachdatensignale übermittelt, wohingegen über die Leitung 5 nur Rechnerdatensignale, insbesondere mit hohen Frequenzen, zwischen dem Rechnernetzwerk 10 - mit Zwischenschaltung der Modemeinrichtung 9 - und dem Verteilerblock 3 der Verteilereinrichtung 2 übermittelt werden. Über die Leitung 6 werden gleichzeitig Sprachdatensignale und Rechnerdatensignale zwischen dem Teilnehmer 12 und dem Verteilerblock 3 übermittelt.

In den Verteilerblock 3 ist eine nicht dargestellte Datensignal-Aufbereitungseinheit integriert, von der die Sprachdatensignale und die Rechnerdatensignale, welche über die Leitungen 4 bzw. 5 dem Veteilerblock 3 zugeführt werden, zu einem kombinierten Sprachdaten-/Rechnerdatensignal zusammengeführt werden, welches dann über die Leitung 6 dem Teilnehmer 12 zugeführt wird. Umgekehrt wird ein vom Teilnehmer 12 über die Leitung 6 dem Verteilerblock 3 zugeführtes kombiniertes Sprachdaten-/Rechnerdatensignal von der in den Verteilerblock integrierten Datensignal-Aufbereitungseinheit in separate Sprachdatensignale und Rechnerdatensignale aufgeteilt und über die jeweils zugehörigen Leitungen 4 bzw. 5 an das Telefonvermittlungssystem 8 bzw. das Rechnernetzwerk 10 weitergeleitet.

Bei der erfindungsgemäßen Telekommunikationsanlage 1 entfallen demnach im Gegensatz zu der oben beschriebenen Anlage gemäß dem Stand der Technik zwei Übertragungsleitungen mit zugehörigen Anschlussteilen sowie ein separater Verteilerblock, der zwischen das Modem und das Telefonvermittlungssystem geschaltet ist.

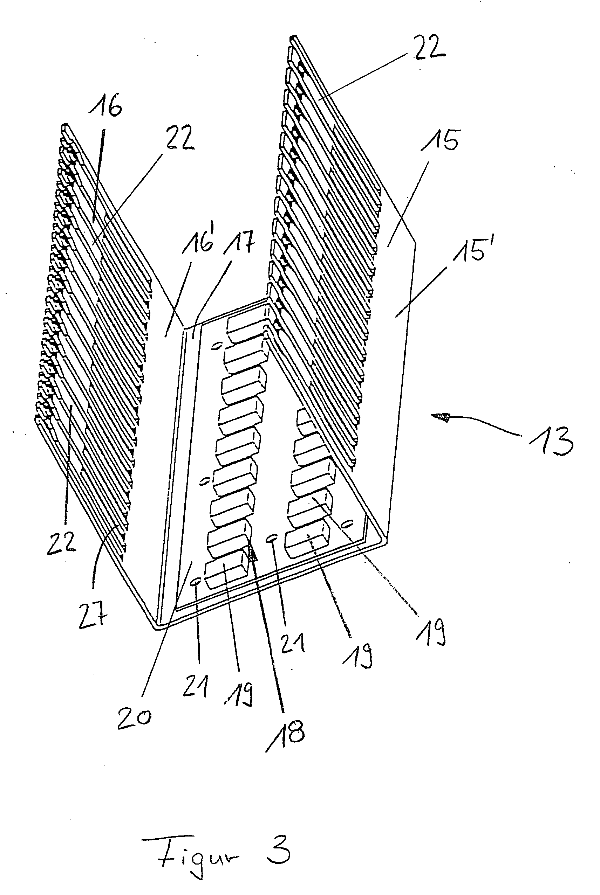

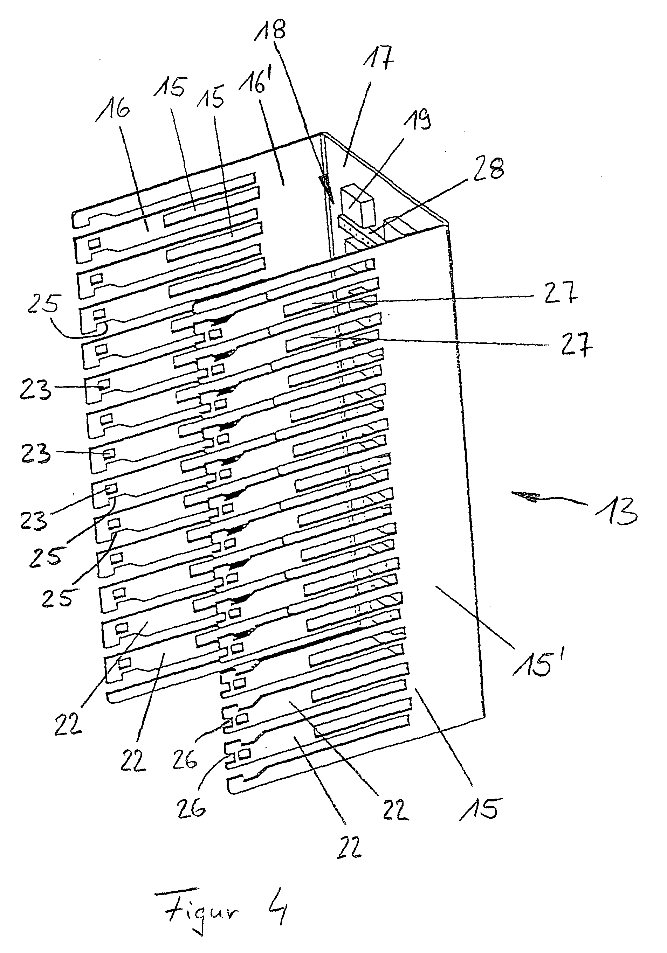

Figuren 3 und 4 zeigen eine langgestreckte Aufnahmewanne 13 eines Verteilerblocks 3 einer Datensignal-Verarbeitungsanlage gemäß einer Ausführungsform der Erfindung in zwei unterschiedlichen perspektivischen Ansichten; der Verteilerblock 3 ist in diesem Falle als Hauptverteiler vorgesehen. In die aus Figuren 1 und 2 ersichtliche Aufnahmewanne 1 werden Funktionselemente 14, wie sie beispielsweise anhand eines Beispiels in Figur 3 dargestellt sind, mit ihrer Längsrichtung quer zur Längsrichtung der Aufnahmewanne 13 übereinanderliegend eingesteckt, wodurch der Verteilerblock 3 ausgebildet wird, mittels dessen die Signale von an den Verteiler angeschlossenen Leitungen in vorbestimmter Weise verteilt werden.

Die Aufnahmewanne 13 hat einen durchgehend U-förmigen Querschnitt und damit zwei zueinander parallele Seitenwände als Wannenschenkel 15, 16 und einen zu diesen Wannenschenkeln 15, 16 senkrecht verlaufenden Wannenboden 17, über den die Wannenschenkel 15, 16 miteinander verbunden sind. Die Aufnahmewanne 13 ist bevorzugt aus einem Blechmaterial gefertigt, welches gut biegbar ist und welches sich ferner gut per Stanzen bearbeiten lässt. Die Art der Herstellung der in der Wanne ausgebildeten Ausnehmungen ist jedoch nicht auf Stanzen beschränkt; es kommen auch andere Herstellungsarten wie zum Beispiel eine Laserbearbeitung in Frage. An der Innenseite der Aufnahmewanne ist eine Datensignal-Aufbereitungseinheit 18 in Form einer Anordnung aktiver und passiver elektronischer Bauteile 19, d.h. Widerstände, Spulen und Spulen und dergleichen bzw. Halbleiterelemente in Form von Transistoren angebracht. Von dieser Datensignal-Aufbereitungseinheit 18 werden die mittels des Verteilers verteilten Datensignale und deren zugehörige Daten erfasst, aufgeteilt und zielorientiert, d.h. gemäß dem vorgesehenen Datenziel und der Datensignalart (Sprachdatensignal oder Rechnerdatensignal) weitergeleitet. Die Datensignal-Aufbereitungseinheit 18 ist damit als sogenannte Splitterfilter-Anordnung ausgebildet, von der aus einem Daten/Datensignalbündel frequenzorientiert Datensignale herausgefiltert und an die zugehörigen Sendeziele weitergeleitet werden. Diese Sendeziele sind bei einer bevorzugten Anordnung des erfindungsgemäßen Hauptverteilers in einer Telekommunikationsanlage die Teilnehmer sowie ein Telefonvermittlungssystem und ein Rechnernetzwerk, mittels deren die gewünschte Vermittlung der Teilnehmer hinsichtlich deren Sprach- und Rechnerdaten untereinander ermöglicht wird. Umgekehrt werden von der Datensignal-Aufbereitungseinheit 18 aber auch von dem Telefonvermittlungssystem ausgehende Sprachdatensignale und von dem Rechnernetzwerk ausgehende Rechnerdatensignale zu kombinierten Sprachdaten/Rechnerdatensignalen zusammengeführt, welche dann über eine gemeinsame Leitung den Teilnehmern zugeführt werden.

Die Datensignal-Aufbereitungseinheit 18 hat eine Platine 20 mit Löchern 21, über welche die Platine 20 am Wannenboden 17 der Aufnahmewanne 13 zum Beispiel mittels Nietens oder Schraubens befestigt ist. Die Bauteile 19 der Datensignal-Aufbereitungseinheit 18 sind ihrerseits in Verbindung mit nicht dargestellten Leiterbahnen stehend auf der Platine 20 mittels Lötens oder Steckkontakten angebracht.

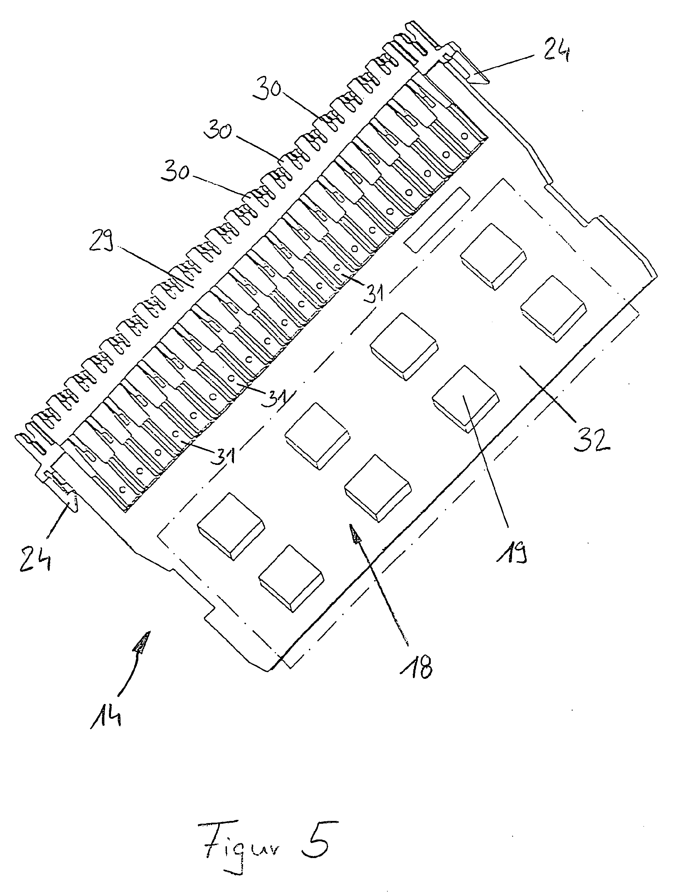

Die Wannenschenkel 15, 16 weisen jeweils eine Reihe von Haltezungen 22 auf, welche z.B. mittels Stanzens aus den Wannenschenkeln 15, 16 ausgeformt sind und welche auch als Anschlusszungen für verteilerinterne Verschaltungsleitungen dienen können. Zwischen dem festgelegten Ende der Haltezungen 22 und dem Wannenboden 17 ist noch ein schmaler Schenkelabschnitt 15', 16' des jeweiligen Wannenschenkels 15, 16 als ausnehmungsfreier Seitenwandabschnitt der Aufnahmewanne 13 vorgesehen, welcher Schenkelabschnitt 15', 16' den Fuß für die zugehörigen Haltezungen 22 bildet. Die jeweilige Haltezunge 22 hat an ihrem freien Endabschnitt eine lochförmige Ausnehmung 23, in welche ein Haken 24 eines zugehörigen Funktionselements 14 (siehe Figur 5) rastend eingreifen kann, um das Funktionselement 14 an der Aufnahmewanne 13 festzulegen. Die jeweilige Haltezunge 22 weist ferner an ihrem freien Endabschnitt eine der Ausnehmung 23 benachbarte Aussparung 25 auf, welche zur Aufnahme einer nicht dargestellten Drahtführung für Verschaltungsdrähte vorgesehen ist. Die Aussparung 25 ist hierzu hakenförmig ausgebildet, so dass die nicht dargestellte Drahführung zu ihrer Befestigung an der Haltezunge 22 mit einem entsprechenden Gegenstück in die Aussparung 25 eingreifen kann. Die Aussparungen 23 der Haltezungen 22 der in Figuren 3 und 4 rechten und linken Wannenschenkel 15, 16 sind in Längsrichtung der Aufnahmewanne 13 gesehen in einander entgegengesetzten Richtungen seitlich offen vorgesehen. Die Haltezungen 22 des in Figuren 3, 4 rechten Wannenschenkels 15 sind an ihren freien Endabschnitten ferner mit einer stirnseitigen Aussparung 26 versehen, wohingegen die freien Endabschnitte der Haltezungen 22 des in Figuren 3, 4 linken Wannenschenkel 16 eine solche Aussparung nicht aufweisen. Die stirnseitigen Aussparungen 26 dienen der Aufnahme von nicht dargestellten Führungsnasen der Funktionselemente 14, so dass letztere bei der Montage des Verteilerblocks nur in richtiger Orientierung in die Aufnahmewanne 13 einsetzbar sind.

Die Haltezungen 22 sind ferner an ihrem anderen Endabschnitt, d.h. ihrem Fußabschnitt, mit einer in Zungenlängsrichtung langgestreckten Ausnehmung 27 versehen. Diese Ausnehmungen 27 dienen der Aufnahme von seitlich an die Aufnahmewanne 13 herangeführten Kabelsteckern (nicht dargestellt), welche ihrerseits in entsprechende Aufnahmebuchsen an den Funkionselementen 14 zur Übertragung von Datensignalen eingesteckt sind. An diesen Kabelsteckern sind Leitungen für die Verschaltung der Funktionselemente 14 und/oder Verschaltungen via Leiterplatinen vorgesehen.

Wie aus Figur 4 ersichtlich ist, weist die Datensignal-Aufbereitungseinheit 18 ferner ein Steckverbinderteil 28 in Form einer Steckbuchse auf, in welches ein zugehöriges, als Stecker ausgebildetes Steckverbinderteil (nicht dargestellt) eines der Funktionselemente 14 eingreifen kann, um so einen elektrischen Kontakt zwischen dem Funktionselement 14 und dessen interner Verschaltung sowie dessen ggf. vorliegender Verschaltung mit anderen Funktionselementen auf einfache Weise durch Einstecken dieses Funktionselements 14 in die Aufnahmewanne 13 zu erzielen.

Das aus Figur 5 ersichtliche Funktionselement 14 ist zur Aufnahme von Kupferkabeln oder sonstigen Litzenkabeln mit einer Klemmleiste 29 mit einer Anzahl von Schneidklemmen 30 vorgesehen, in welche die anzuschließenden Kupferkabel (nicht dargestellt) eingesteckt werden. Die Schneidklemmen 30 sind aufeinanderfolgend in einer Längsreihe angeordnet, wobei sich am jeweiligen Stirnende der Klemmleiste 29 einer der oben beschriebenen Haken 24 befindet. Die Schneidklemmen 30 sind nach unten hin durch Kontaktfedern 31 fortgesetzt, über welche ein Steckkontakt mit einer nicht dargestellten Verteilungsschaltung erzielt wird. Das Funktionselement 14 weist ferner eine nicht dargestellte zweite Klemmleiste auf, welche der oben beschriebenen Klemmleiste 29 entsprechend ausgebildet ist und zu dieser parallel angeordnet ist. Der Signalfluss verläuft in der Regel nur separat in den jeweiligen Funktionselementen 14, und zwar zwischen den Leitungen, die an die beiden zu dem Funktionselement 14 gehörigen Kabelleisten angeschlossen sind. Es sind jedoch auch Verschaltungen zwischen Leitungen denkbar, die an unterschiedliche Funktionselemente 14 angeschlossen sind. Ferner kann ein Funktionselement auch mehr als zwei Kabelleisten aufweisen. Die Verschaltungen sind in Form von in den Hauptverteiler integrierten Kabelführungen ausgeführt; alternativ sind auch Leiterplatinen mit entsprechenden Leiterbahnen als Verschaltungen vorgesehen.

Die Klemmleiste 29 und die nicht dargestellte Klemmleiste sind an einer Leiterplatine 32 angebracht, auf welcher Bauteile 19 einer Datensignal-Aufbereitungseinheit 18 angebracht sind. Die Leiterplatine kann auch beidseitig mit derartigen Bauteilen versehen sein, wodurch eine Platzersparnis erzielt wird. Die Anordnung der Datensignal-Aufbereitungseinheit 18 am Funktionselement 14 hat den Vorteil, dass sie speziell an den zugehörigen Verschaltungsplan des Funktionselements 14 angepasst werden kann und damit an beliebiger Stelle in beliebigen Aufnahmewannen 13 angeordnet werden kann, ohne dass zusätzliche Abstimmungen zwischen Aufbereitungseinheit 18 und Funktionselement 14 vorgenommen werden müssen.

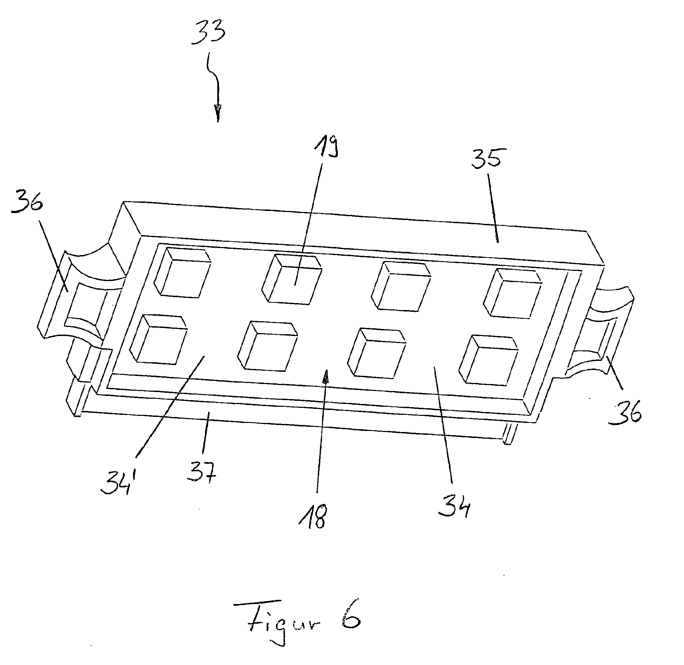

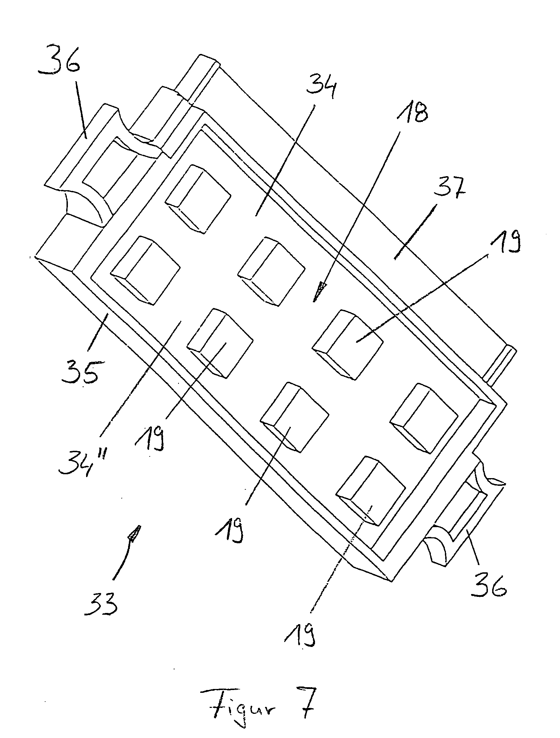

Figuren 6 und 7 zeigen ein erfindungsgemäßes Kassettenelement 33 einer Verteilereinrichtung einer Datensignal-Verarbeitungsanlage gemäß einer Ausführungsform der Erfindung in zwei unterschiedlichen perspektivischen Ansichten.

Das Kassettenelement 33 weist eine Leiterplatine 34 auf, auf deren beiden Seiten, d.h. auf deren Vorderseite 34' und Rückseite 34*'',* jeweils Bauteile 19 einer wie oben beschriebenen Datensignal-Aufbereitungseinheit 18 angebracht sind. Die Leiterplatine 34 ist von einem Rahmen 35 eingefasst, an dem zwei Handgriffe 36 angebracht sind, die an einander entgegengesetzten Rahmenabschnitten angeordnet sind. Das Kassettenelement 33 ist rechteckig ausgebildet, wobei die Handgriffe 36 an den kürzeren Rechteckseiten des Rahmens 35 angeordnet sind. An einer Längsseite des Kassettenelements 33 ist eine Kontaktfederleiste 37 vorgesehen, welche mit den auf der Leiterplatine 32 angeordneten Bauteilen 19 der Datensignal-Aufbereitungsanlage 18 in elektrischer Verbindung steht und welche in eine ihr zugeordnete Aufnahmebuchse (nicht dargestellt) an einem zugehörigen Funktionselement 14 einsteckbar ist, um eine elektrische Verbindung zwischen der kassettenseitigen Datensignal-Aufbereitungseinheit 18 und der Verschaltung und/oder der Datensignal-Aufbereitungseinheit 18 des Funktionselements 14 und/oder der Datensignal-Aufbereitungseinheit in der Aufnahmewanne 13, in welcher das Funktionselement 14 aufgenommen ist, herzustellen.

Besonders bevorzugt ist die Kontaktfederleiste 37 des Kassettenelements 33 zu einer solchen funktionselementseitigen Anschlussbuchse kompatibel ausgebildet, die ansonsten zur Aufnahme von Überspannungs-/Überstrom-Schutzmagazinen vorgesehen ist. Damit kann im Falle, dass es die vorgegeben Schutzvorschriften erlauben, das Schutzmagazin einer Verteilereinrichtung, z.B. eines Hauptverteilers einer Telekommunikationsanlage, unter Ausbildung einer erfindungsgemäßen Verteilereinrichtung durch das erfindungsgemäße Kassettenelement mit Datensignal-Aufbereitungseinheit 18 ersetzt werden, wodurch die zugehörige Datensignal-Verarbeitungsanlage zu einer schnelleren und dennoch sicher arbeitenden Anlage aufrüstbar ist.

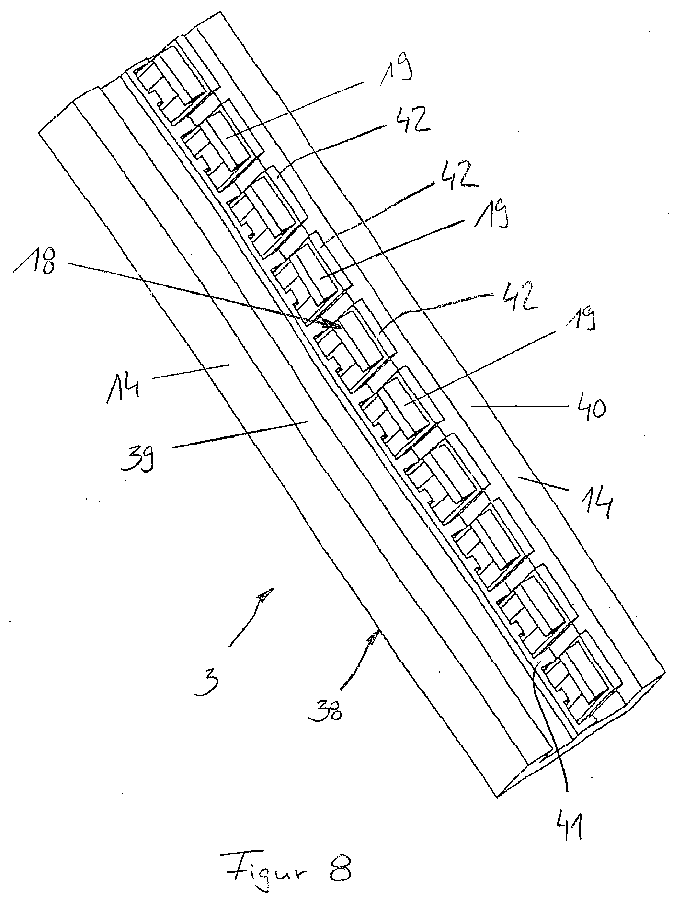

In Figur 8 ist ein Verteilerblock 3 in Form einer langgestreckten Verteilerleiste 38 gemäß einer Ausführungsform der Erfindung dargestellt. Die Verteilerleiste 38 hat im Querschnitt ein E-Profil, wobei die beiden äußeren Leistenschenkel 39, 40 der Verteilerleiste 38 die Funktionselememte 14 bilden, an die nicht dargestellte Signalleitungen angeschlossen werden. Hierzu weisen die Leistenschenkel 39, 40 an ihrer Rückseite Kabelklemmen auf, an denen die Signalleitungen angebracht werden können.

Ein mittlerer Schenkel 41 der E-profilierten Verteilerleiste 38 ist an seiner Vorderseite mit Ausnehmungen zur Aufnahme von Einzelsteckern 42 versehen, an denen ihrerseits Bauteile 19 einer Datensignal-Aufbereitungseinheit 18 angebracht sind. Die Einzelstecker 42 sind im Austausch gegen Überstrom/Überspannungs-Schutzstecker in den Ausnehmungen aufgenommen. Im Falle dass die verteilerleiste nicht mit derartigen Schutzsteckern vorgesehen ist, können die Bauteile 19 der Datensignal-Aufbereitungseinheit 18 auch durch andere Befestigungsarten an der Verteilerleiste angebracht sein, z.B. durch Anschrauben am mittleren Schenkel 41.

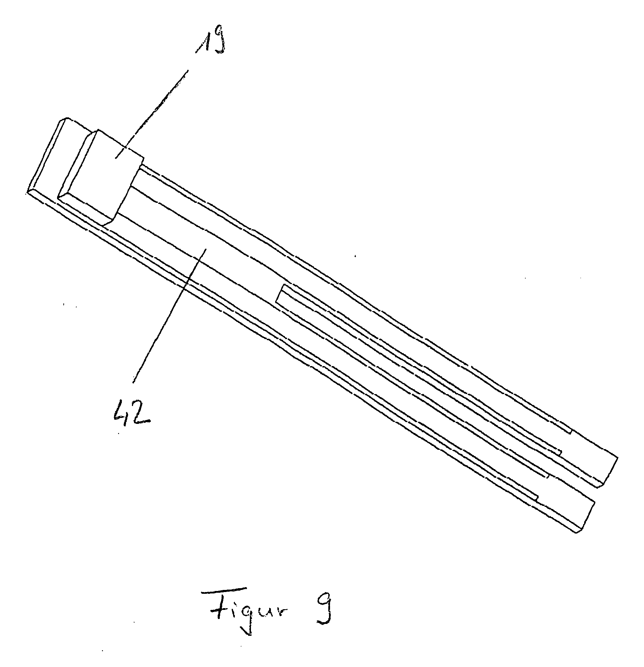

In Figur 9 ist ein erfindungsgemäßer Einzelstecker 42 mit einem Bauteil 19 einer Datensignal-Aufbereitungseinheit dargestellt.

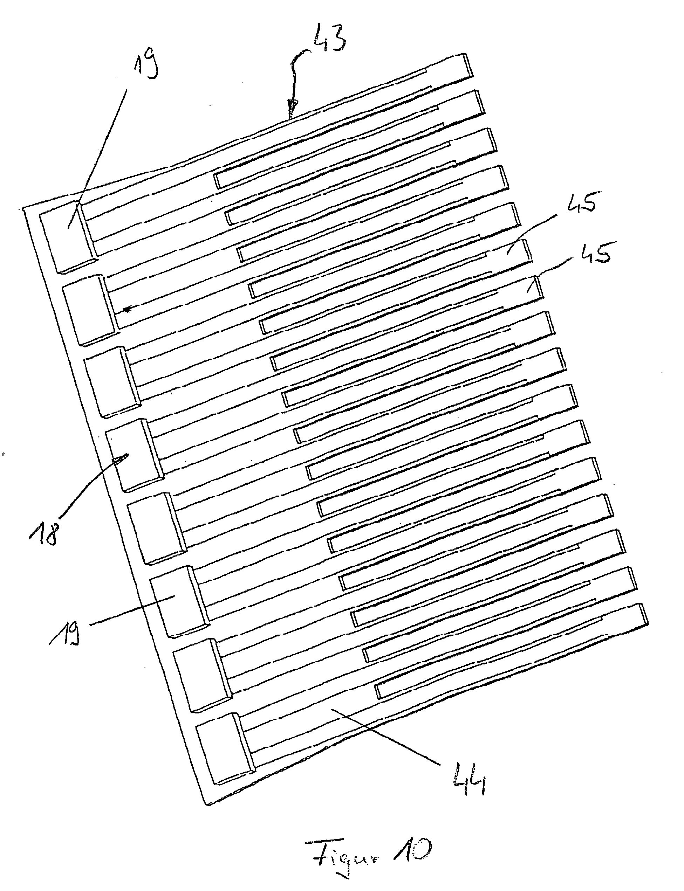

Aus Figur 10 ist eine Alternative zu den Einzelsteckern 42 ersichtlich; hiernach ist eine Steckerkassette 43 vorgesehen, welche eine Platine 44 aufweist, aus der Anschlusszungen 45 ausgeformt sind, welche in elektrischen Kontakt mit der Verteilerleiste 38 gebracht werden können, indem die Steckerkassette 43 mit ihren Anschlusszungen in die Ausnehmungen der Verteilerleiste 38 eingesteckt wird. Auf der Platine 44 sind ferner Bauteile 19 einer Datensignal-Aufbereitungseinheit 18 angebracht.

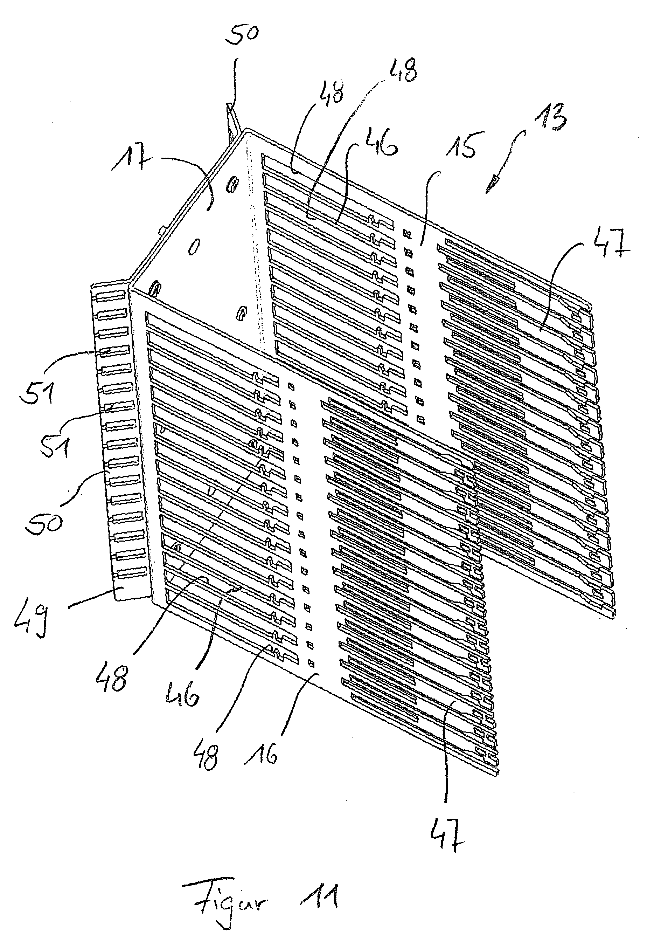

In Figur 11 ist eine andere Aufnahmewanne 13 eines Hauptverteilers nach einer Ausführungsform der Erfindung dargestellt. Diese Aufnahmewanne 13 unterscheidet sich von der in Figuren 3 und 4 gezeigten Aufnahmewanne 13 dadurch, dass sie längere Wannenschenkel 15, 16 aufweist, die jeweils zwei Schenkelbereiche 46, 47 aufweisen, und zwar einen dem Wannenboden 17 benachbarten Schenkelbereich 46 und einen dem Wannenboden abgewandten Schenkelbereich 47. Letztere sind zu den Wannenschenkeln 15, 16 der in Figuren 3, 4 beschriebenen Aufnahmewanne im wesentlichen identisch ausgebildet, so dass ihre Beschreibung wegggelassen wird.

Die dem Wannenboden 17 zugewandten Schenkelbereiche 46 der Wannenschenkel 15, 16 weisen jeweils langgestreckte Ausnehmungen 48 auf, die sich mit ihrer Längsrichtung in jene Richtung erstrecken, in die sich der jeweilige Wannenschenkel 15, 16 vom Wannenboden 17 wegerstreckt. Die Ausnehmungen 48 dienen der Aufnahme von Kassettenelementen 33, die von der Seite der Aufnahmewanne 13 her in die Ausnehmungen 48 einführbar sind und anschließend in die im vorderen Bereich zwischen den Schenkelbereichen 47 angegeordneten Funktionselemente 14 unter Herstellung einer elektrischen Verbindung einsteckbar sind.

Auf der Rückseite des Wannenbodens 17 ist eine Halterung 49 angeschraubt, welche parallel zum Seitenrand des Wannenbodens 17 sowie sich hiervon nach außen erstreckende Leisten 50 mit darin ausgebildeten Schlitzen 51 zur Aufnahme von nicht dargestellten Datensignalleitungen aufweist.

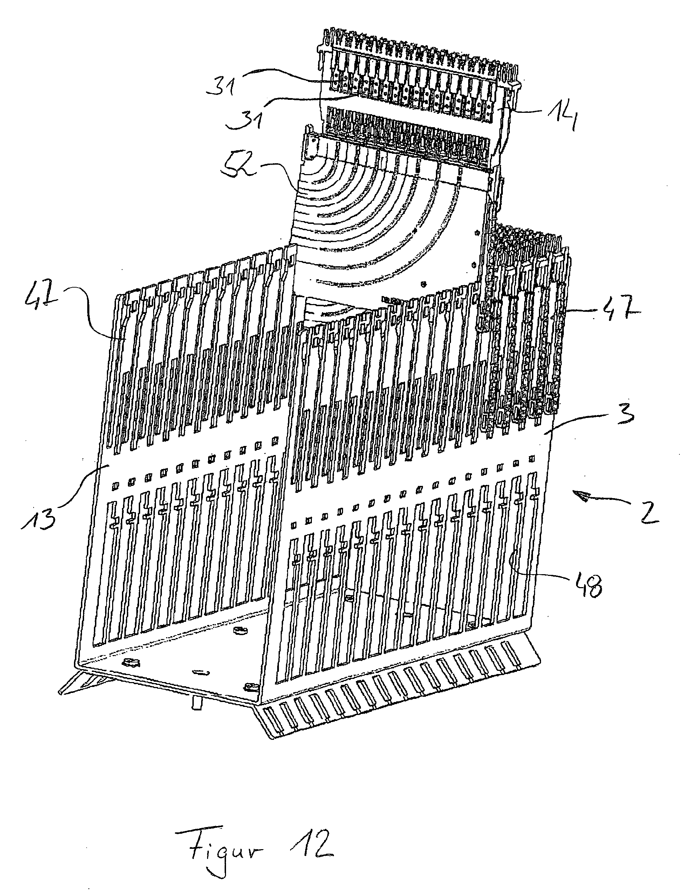

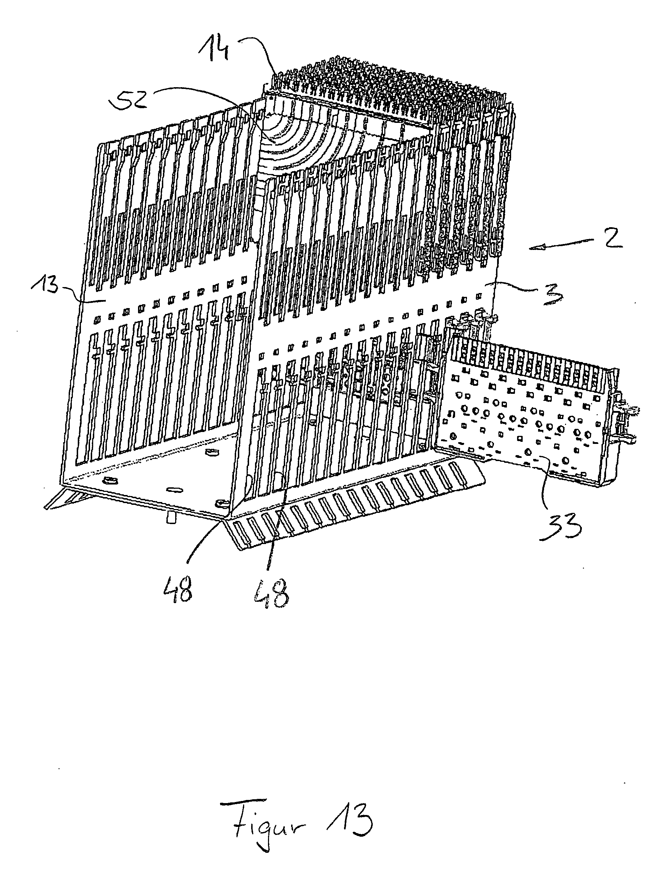

Figuren 12 und 13 zeigen Montagevorgänge beim Zusammenbau eines erfindungsgemäßem Hauptverteilers als Verteilerblock 3 einer Verteilereinrichtung 2. Der Hauptverteiler hat eine Aufnahmewanne 13 gemäß der anhand Figur 11 beschriebenen Art, so dass hinsichtlich des Aufbaus der Aufnahmewanne 13 auf obige Erläuterungen verwiesen wird.

In den vorderen Bereich zwischen den Schenkelbereichen 47 der Aufnahmewanne 13 sind Funktionselemente 14 mit daran angeschlossenen Kabelführungen 52 angeordnet, wobei die Funktionselemente 14 in den Kabelführungen 52 aufgenommen sind und mit diesen über ihre Kontaktfedern 31 im elektrischen Kontakt stehen.

Aus Figur 13 ist ersichtlich, wie ein Kassettenelement 33 von der Seite der Aufnahmewanne 13 her in die zugehörige Ausnehmung 48 einführbar ist. Die Kassettenelemente 33 sind dann von der Rückseite der Funktionselemente 14 her unter Ausbildung eines elektrischen Kontakts mit den Funktionselementen 14 zusammensteckbar.

Bei dieser Ausführungsform der Erfindung sind die elektronischen Bauteile der Datensignal-Aufbereitungseinheit innerhalb des jeweiligen Kassettenelements 33 angeordnet. Das heißt, dass in diesem Falle jedes Funktionselement 14 eine speziell ihm zugeordnete Datensignal-Aufbereitungseinheit aufweist.

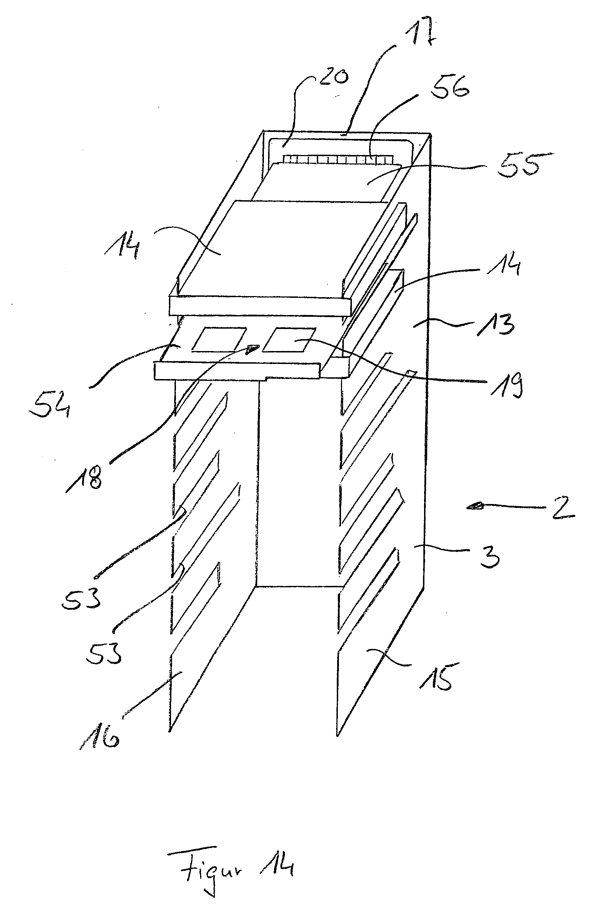

Figur 14 zeigt schematisch eine Verteilereinrichtung 2 mit einem Verteilerblock 3 in Form eines Hauptverteilers gemäß einer Ausführungsform der Erfindung. Der Verteilerblock 3 weist eine Aufnahmewanne 13 mit U-Profil auf, in deren Wannenschenkeln 15, 16 Schlitze 53 zur Aufnahme von Funkionselementen 14 und zwischen diesen angeordneten Zwischenplatinen 54 (nur eine ist dargestellt) ausgebildet sind. Auf der jeweiligen Zwischenplatine 54 ist eine dem jeweiligen Funktionselement 14 zugeordnete Datensignal-Aufbereitungseinheit 6 mit elektronischen Bauteilen 19 angeordnet.

Hinter dem jeweiligen Funktionselement 14 ist zwischen demselben und dem Boden 17 der Aufnahmewanne 13 eine Leiterplatine 55 angeordnet, welche mit dem zugehörigen Funktionselement 14 elekrisch verbunden zusammengesteckt ist. Die Leiterplatine 55 kann auch als Trägerplatine zur Aufnahme von elektronischen Bauteilen der oder einer Datensignal-Aufbereitungseinheit sein; sie ist über eine Steckerleiste 56 elektrisch mit einer Leiterplatine 20 (Backplane) verbunden, die auf der Innenseite des Wannenbodens 17 angebracht ist. In diesem Falle sind auf der Leiterplatine 55 und der Leiterplatine 20 Leiterbahnen vorgesehen, von denen eine Verschaltung für das jeweils zugehörige Funktionselement 14 gebildet wird.

## Patentansprüche

1. Verteilerleiste eines Verteilerblocks (3) einer Datensignal-Verarbeitungsanlage, mit zwei äußeren Leistenschenkel (39, 40), die Funktionselemente (14) bilden, wobei an die Funktionselemente (14) Datensignalleitungen (4, 5, 6) anschließbar sind, und wobei die Funktionselemente (14) eine Verschalung zur Verteilung der von den Datensignalleitungen (4, 5, 6) an die Verteilerleiste übermittelten Datensignale aufweisen;
mit Ausnehmungen, die zwischen den beiden äußeren, die Funktionselemente (14) bildenden Leistenschenkeln (39, 40) an der Vorderseite der Verteilereiste angeordnetet sind, wobei die Ausnehmungen der Aufnahme von Einzelsteckern (42) oder der Aufnahme einer Steckerkassette (43) dienen, wobei der Einzelstecker (42) oder die Steckerkassette (43) eine Datensignal-Aufbereitungseinheit (18) mit aktiven und/oder passiven elektronischen Bauteilen (19) aufweist, und wobei von der Datensignal-Aufbereitungseinheit (18) die von den Datensignalleitungen (4, 5, 6) übermittelten Datensignale in vorbestimmter Weise aufbereitet werden.

2. Verteilerleiste nach Anspruch 1, **dadurch gekennzeichnet, dass** die Datensignal-Aufbereitungseinheit (18) in die Einzelstecker (42) oder in die Steckerkassette (43) derart integriert ist, dass der Einzelstecker (42) oder die Steckerkassette (43) zusammen mit der Datensignal-Aufbereitungseinheit (18) in die zwischen den beiden äußeren Leistenschenkeln (39, 40) angeordneten Ausnehmungen einsteckbar ist.

3. Verteilerleiste nach Anspruch 1 oder 2, **dadurch gekennzeichnet, dass** die elektronischen Bauteile (19) der Datensignal-Aufbereitungseinheit (18) eine Filter-Anordnung aus Hoch- und/oder Tief- und/oder Bandpassfiltern ausbilden, von der die von den Datensignalleitungen (4, 5, 6) übermittelten Datensignale gemäß deren Frequenzbereiche ausfilterbar und weiterleitbar sind.

4. Verteilerleiste nach einem oder mehreren der Ansprüche 1 bis 3, **dadurch gekennzeichnet, dass** der Einzelstecker (42) oder in die Steckerkassette (43) derart ausgebildet ist, dass dieselben im Austausch gegen Überstrom/Überspannungsstecker in die Ausnehmungen einsteckbar sind.

5. Verteilerleiste nach einem oder mehreren der Ansprüche 1 bis 4, **dadurch gekennzeichnet, dass** der Einzelstecker (42) oder in die Steckerkassette (43) derart ausgebildet ist, dass dieselben mit Anschlusszungen (45) in die Ausnehmungen der Verteilerleiste einsteckbar sind.

6. Steckerelement, nämlich Einzelstecker (42) oder Steckerkassette (43), für eine Verteilerleiste eines Verteilerblocks (3) einer Datensignal-Verarbeitungsanlage, wobei das Streckerelement in an einer Vorderseite der Verteilerleiste angeordnete Ausnehmungen einsteckbar ist, wobei die Ausnehmungen der Verteilerleiste zwischen zwei äußeren, Funktionselemente (14) bildenden Leistenschenkel (39, 40) der Verteilerleiste angeordnet sind, wobei an die Funktionselemente (14) der Verteilerleiste Datensignalleitungen (4, 5, 6) anschließbar sind, und wobei die Funktionselemente (14) eine Verschaltung zur Verteilung der von den Datensignalleitungen (4, 5, 6) an die Verteilerleiste übermittelten Datensignale aufweisen, **dadurch gekennzeichnet, dass** der Einzelstecker (42) oder die Steckerkassette (43) eine Datensignal-Aufbereitungseinheit (18) mit aktiven und/oder passiven elektronischen Bauteilen (19) aufweist, und wobei von der Datensignal-Aufbereitungseinheit (18) die von den Datensignalleitungen übermittelten Datensignale in vorbestimmter Weise aufbereitet werden.

7. Steckerelement nach Anspruch 6, **dadurch gekennzeichnet, dass** die Datensignal-Aufbereitungseinheit (18) in das Steckerelement derart integriert ist, dass das Steckerlement zusammen mit der Datensignal-Aufbereitungseinheit (18) in die zwischen den beiden äußeren Leistenschenkeln (39, 40) angeordneten Ausnehmungen der Verteilerleiste einsteckbar ist.

8. Steckerelement nach Anspruch 6 oder 7, **dadurch gekennzeichnet, dass** dasselbe derart ausgebildet ist, dass es im Austausch gegen Überstrom/Überspannungsstecker in die Ausnehmungen der Verteilerleiste einsteckbar sind.

9. Steckerelement nach einem oder mehreren der Ansprüche 6 bis 8, **dadurch gekennzeichnet, dass** dasselbe derart ausgebildet ist, dass es mit Anschlusszungen (45) in die Ausnehmungen der Verteilerleiste einsteckbar ist.

10. Steckerelement nach einem oder mehreren der Ansprüche 6 bis 9, **dadurch gekennzeichnet, dass** die elektronischen Bauteile (19) der Datensignal-Aufbereitungseinheit (18) eine Filter-Anordnung aus Hoch- und/oder Tiefund/oder Bandpassfiltern ausbilden.
